# FASCICULE DE BREVET EUROPEEN

(11) **EP 4 124 877 B1**
(45) Date de publication et mention de la délivrance du brevet: **25.11.2026**
(21) Numéro de dépôt: 22186706.2
(22) Date de dépôt: 25.07.2022
(51) Int. Cl.: G01S 5/02, G01S 5/06

(54) **PROCÉDÉ D ANALYSE DE SIGNAUX INTERCEPTÉS PAR UN SYSTÈME DE RÉCEPTION ÉLECTROMAGNÉTIQUE ET SYSTÈME ASSOCIÉ**
VERFAHREN ZUR ANALYSE VON DURCH EIN ELEKTROMAGNETISCHES EMPFANGSSYSTEM ABGEFANGENEN SIGNALEN UND ENTSPRECHENDES SYSTEM
METHOD FOR ANALYSING SIGNALS INTERCEPTED BY AN ELECTROMAGNETIC RECEIVER SYSTEM AND ASSOCIATED SYSTEM

(30) Priorité: 26.07.2021 FR 2108069
(43) Date de publication de la demande: 01.02.2023
(73) Titulaire: THALES, 92400 Courbevoie (FR)
(72) Inventeur: LE MEUR, Anne, 78851 ELANCOURT CEDEX (FR); GRANDIN, Jean-François, 78851 ELANCOURT CEDEX (FR); LEMOINE, Jean-Marie, 78851 ELANCOURT CEDEX (FR); DELABBAYE, Jean-Yves, 78125 VIEILLE-EGLISE-EN-YVELINES (FR)
(74) Mandataire: Lavoix

(56) Documents cités:
- US-A1- 2006 066 486
- US-A1- 2021 223 353
- HACK DANIEL E ET AL: "Centralized Passive MIMO Radar Detection Without Direct-Path Reference Signals", IEEE TRANSACTIONS ON SIGNAL PROCESSING, IEEE, USA, vol. 62, no. 11, 1 June 2014 (2014-06-01), pages 3013 - 3023, XP011548103, ISSN: 1053-587X, [retrieved on 20140513], DOI: 10.1109/TSP.2014.2320462
- VANKAYALAPATI NARESH ET AL: "TDOA based direct positioning maximum likelihood estimator and the cramer-rao bound", IEEE TRANSACTIONS ON AEROSPACE AND ELECTRONIC SYSTEMS, IEEE SERVICE CENTER, PISCATAWAY, NJ, US, vol. 50, no. 3, 1 July 2014 (2014-07-01), pages 1616 - 1635, XP011567361, ISSN: 0018-9251, [retrieved on 20141124], DOI: 10.1109/TAES.2013.110499

## Description

La présente invention est relative au domaine des procédés d'analyse des signaux électromagnétiques interceptés dans l'environnement, et plus particulièrement aux procédés d'analyse d'un signal d'intérêt, émis par une source fixe au sol, intercepté par un récepteur composé d'au moins trois capteurs distants les uns des autres, afin de localiser ladite source.

Les capteurs forment une configuration permettant au récepteur de réaliser une fonction de localisation de sources par différence de temps d'arrivée (Time Difference Of Arrival ou TDOA en anglais) et/ou par différence de fréquence (Frequence Difference Of Arrival ou FDOA en anglais).

Chaque capteur comporte une antenne et une voie de réception associée à cette antenne.

De manière générale, on distingue deux grandes classes de fonction de localisation par TDOA et/ou FDOA : d'une part, les fonctions dites décentralisées, qui consistent à calculer des paramètres intermédiaires localement sur chaque capteur, puis à estimer la localisation de la source sur un calculateur centralisé ; et d'autre part, les fonctions centralisées, qui consistent à estimer la localisation de la source directement sur un calculateur centralisé à partir des signaux délivrés par chaque voie de réception et transmis à un calculateur centralisé. On considère ici une architecture centralisée.

Chaque capteur perçoit le signal d'intérêt avec un retard et éventuellement un décalage doppler qui lui est propre.

De plus, bien que cela n'empêche pas la mise en oeuvre de la fonction de localisation par TDOA et/ou FDOA, le passage du signal d'intérêt à travers un capteur se traduit par un gain complexe sur le signal brut. Ce gain est propre à chaque capteur, puisque les différents capteurs ne sont pas calibrés.

Enfin, l'obtention du signal passe par une démodulation.

Par ailleurs, l'analyse du signal d'intérêt est affectée par deux types d'imperfection : premièrement, le signal d'intérêt est entaché d'un bruit thermique additif indépendant de capteur à capteur ; deuxièmement, le signal d'intérêt peut être mélangé avec un autre signal, ou avec plusieurs autres signaux.

Ces autres signaux peuvent être présents sur une seule voie de réception, sur plusieurs d'entre elles, voire sur toutes les voies de réception, par exemple s'il s'agit de signaux continus. Ces autres signaux peuvent eux-mêmes être des signaux d'intérêt, mais ils constituent une gêne vis-à-vis du signal d'intérêt en cours d'analyse.

Cependant, les méthodes connues ne font pas de distinction entre une situation dans laquelle le signal d'intérêt n'est pas mélangé et une situation dans laquelle le signal d'intérêt est mélangé.

De plus, ces méthodes connues ne traitent pas du filtrage spatial de signaux reçus par des capteurs distants et non calibrés.

Dans le domaine dont relève la présente invention, on connaît l'article HACK DANIEL E ET AL: "Centralized Passive MIMO Radar Detection Without Direct-Path Reference Signals", IEEE TRANSACTIONS ON SIGNAL PROCESSING, IEEE, USA, vol. 62, no. 11, 1 juin 2014 (2014-06-01), pages 3013-3023, XP011548103décrit une technique de détection / localisation exploitant une fonction d'ambiguïté croisée - CAF (« Cross Ambiguity Function »). Cet article ne traite pas de l'estimation des gains ni de l'estimation du signal, et ne propose pas de test monosource versus multisources.

Le document US 2021/223353 A1 traite simplement de l'adaptation de l'échantillonnage à la bande du signal, pour une application de localisation utilisant la CAF. Il est en effet inutile d'échantillonner à une fréquence trop élevée, car cela fait rentrer du bruit. Il faut donc être à peu près adapté à la bande du signal. Un suréchantillonnage modéré est cependant nécessaire pour avoir de la précision dans l'estimation.

Le but de cette invention est de résoudre ces différents problèmes.

Pour cela l'invention a pour objet un procédé d'analyse de signaux, un système de réception électromagnétique et un produit programme d'ordinateur conformes aux revendications annexées.

L'invention et ses avantages seront mieux compris à la lecture de la description détaillée qui va suivre d'un mode de réalisation particuliers, donné uniquement à titre d'exemple non limitatif, cette description étant faite en se référant aux dessins annexés sur lesquels :
[Fig 1] La figure 1 est une représentation schématique du récepteur pour la mise en oeuvre du procédé d'analyse en vue de la localisation d'une source émettrice d'un signal intercepté ;
[Fig 2] la figure 2 est une représentation sous forme de blocs d'un premier mode de réalisation du procédé selon l'invention ; et,

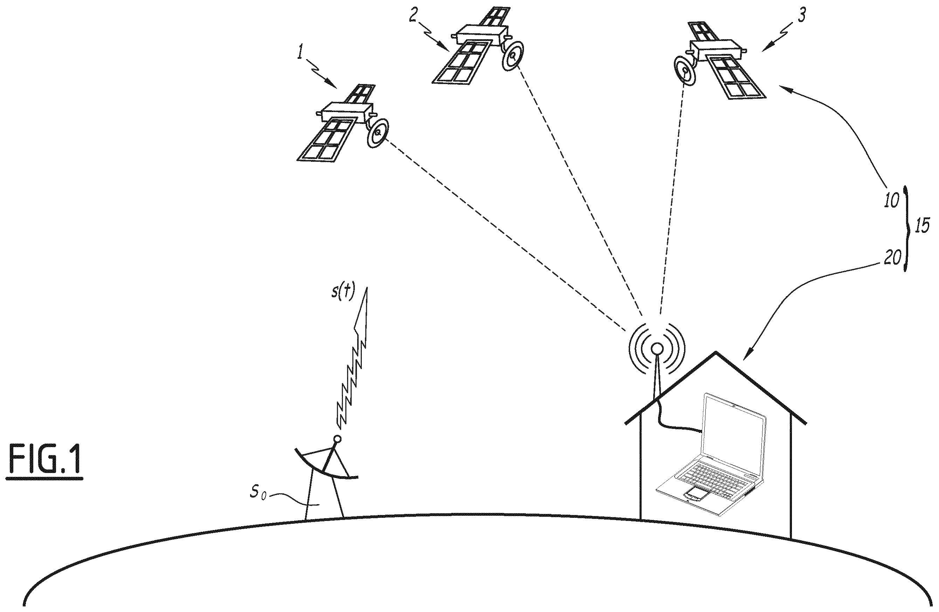

Sur la figure 1, est représentée une source S₀ fixe, sur le sol.

Un point à la surface du sol est identifié par une paire de coordonnées, (*x*, *y*).

La source est localisée au point (*x*₀,*y*₀).

La source S₀ émet un signal d'intérêt s(t), qui est une fonction du temps *t.*

Un système de réception électromagnétique 15 est constitué d'une constellation 10 de capteurs et d'un central de calcul 20.

Un capteur appartenant à la constellation 10 est repéré par un indice entier, p, entre 1 et P. Dans le mode de réalisation de la figure 1, P est égal à trois.

Pour des raisons de clarté de la description, chaque capteur p de la constellation 10 intègre une antenne et une voie de réception. Par conséquent, antenne et voie de réception seront repérées par l'indice p du capteur auquel elles sont associées. On parlera indifféremment du capteur p ou de la voie de réception p correspondante.

Les capteurs sont supposés synchronisés temporellement.

En variante, les capteurs sont mobiles, mais de trajectoires connues, de sorte que leurs positions par rapport au sol sont connues à chaque instant. En variante, ils sont fixes par rapport au sol et de positions connues.

Le central de calcul 20 est propre à recevoir de chacun des capteurs de la constellation soit le signal en sortie de la voie de réception p (qui sera ensuite démodulé par un oscillateur commun du central de calcul pour obtenir un signal mesuré - premier mode de réalisation), soit le signal démodulé en sortie de la voie de réception p (la démodulation ayant été faite au moyen d'un oscillateur local embarqué par le capteur *p ,* les oscillateurs locaux étant recalés sur la même fréquence - seconde mode de réalisation).

Le central de calcul 20 est un ordinateur qui comporte un moyen de calcul, tel qu'un processeur, et un moyen de mémorisation, tel qu'une mémoire vive et une mémoire morte. Le moyen de mémorisation stocke les instructions de programmes d'ordinateur, qui, lorsqu'elles sont exécutées par le moyen de calcul, permettent la mise en oeuvre des fonctionnalités correspondantes.

Parmi ces programmes d'ordinateur, le central de calcul 20 comporte un programme d'analyse dont l'exécution permet la mise en oeuvre du procédé d'analyse selon l'invention.

### MODE DE REALISATION

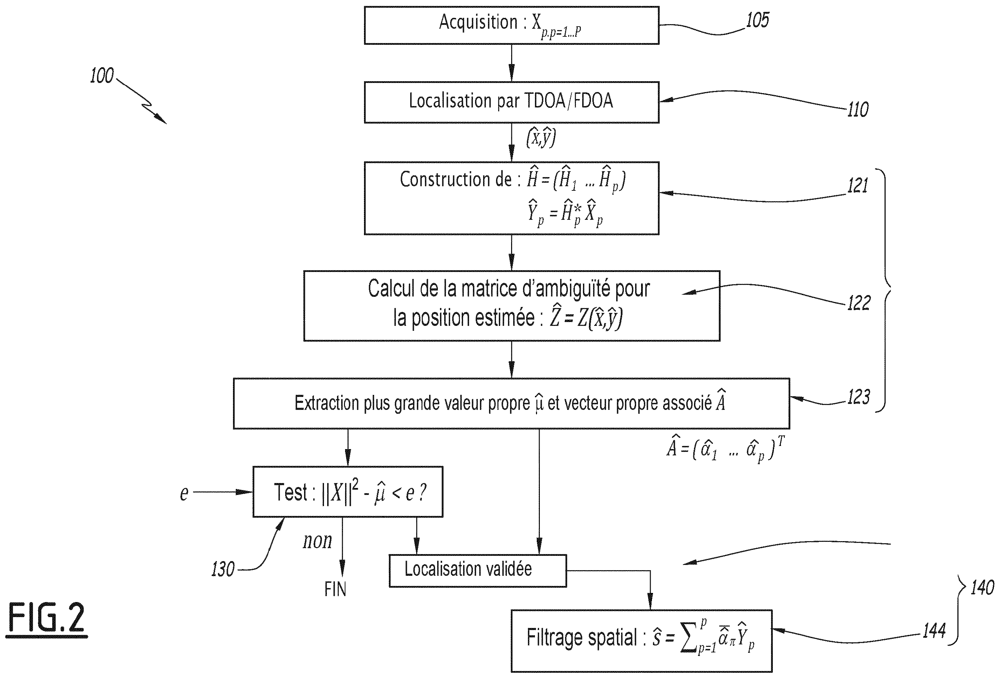

Un premier mode de réalisation du procédé d'analyse selon l'invention va être décrit en référence à la figure 2.

Le signal d'intérêt *s*(*t*) est intercepté par chaque capteur *p*, qui le transmet au central d'analyse 20.

Le procédé d'analyse 100 débute par une étape 105 d'acquisition des signaux délivrés par chacune des voies de réception *p* des capteurs pendant un intervalle de temps de durée *T* centré sur *t*₀.

Sur cet intervalle temporel d'observation, de durée *T* centré sur *t*₀, les signaux sont d'abord démodulés, avec une fréquence *f*₀ (fournie par un oscillateur commun), proche de leur fréquence centrale, puis les signaux sont échantillonnés.

Les étapes suivantes du procédé sont fondées sur la modélisation suivante.

En utilisant le fait que $\left|\frac{{v}_{p}}{c}\right| \frac{T}{2}$ est négligeable devant l'inverse de la bande du signal d'intérêt et que les signaux des *P* capteurs sont démodulés par la même fréquence *f*₀, on peut modéliser la transformation du signal entre l'émission et la réception sur le capteur d'indice *p*, par la transformation : $s \left(t\right) \to {e}^{{iφ}_{p}} {e}^{- 2 {πf}_{p} t} s \left(t-{τ}_{p}\right)$ Où *τₚ* est le délai de propagation du signal entre la source S₀ et le capteur *p* : ${τ}_{p} = \frac{{δ}_{p}}{c}$; où *δₚ* est la distance de la source au capteur *p* à l'instant *t*₀ ; où *fₚ* est le décalage Doppler du signal entre la source et le capteur *p* : ${f}_{p} = {f}_{0} \frac{{v}_{p}}{c}$; où *vₚ* est la vitesse de déplacement radiale de la source par rapport au capteur *p* à l'instant *t*₀ ; où *c* est la vitesse de la lumière ; et où *φₚ* est une phase qu'on ne cherchera pas à expliciter.

Sans perte de généralité, on impose que *Σₚτₚ =* 0, ce qui revient à redéfinir les délais de propagation sans prendre en compte le délai de propagation commun entre la source et le barycentre des capteurs. De même, on suppose que *Σₚfₚ =* 0.

Outre les effets du retard modélisés par la transformation précédente, le signal mesuré associé au capteur *p* résulte des transformations dues :
- à la propagation ionosphérique entre la source et le capteur considéré ;
- au gain du capteur considéré.

Ces différentes transformations peuvent être modélisées par la multiplication par un scalaire complexe *αₚ* constant sur l'intervalle d'observation, prenant en compte le gain de l'antenne ainsi que la propagation ionosphérique entre la source et le capteur considéré. En intégrant la phase *φₚ* dans la phase de *αₚ,* la transformation entre l'émission et la réception peut être modélisée par: $s \left(t\right) \to {α}_{p} {h}_{p} \left[s\left(.\right)\right] \left(t\right) = {α}_{p} {e}^{- i 2 {πf}_{p} t} s \left(t-{τ}_{p}\right)$

A cause de l'échantillonnage temporel, les opérateurs *hₚ* prennent la forme de matrices notées *Hₚ.* La matrice *Hₚ* est la matrice de transfert entre le signal émis par la source et le signal mesuré, via le capteur d'indice *p.*

Une matrice *Hₚ* peut par exemple s'écrire sous la forme : ${H}_{p} = {D}_{{f}_{p}} F * {D}_{{τ}_{p}} F$

Où $F = \frac{1}{\sqrt{N}} exp \left(-j\frac{2 π}{N}n. {n}^{T}\right)$, où ***n*** désigne le vecteur ${\left(-\frac{N}{2} -\frac{N}{2}+1 … \frac{N}{2}-1\right)}^{T}$,

Et où ${D}_{{f}_{p}} = diag \left(exp\left(-j2{πf}_{p}n\right)\right) ,$

Et où ${D}_{{τ}_{p}} = diag \left(exp\left(-j\left(\frac{2 π}{N}\right){τ}_{p}n\right)\right) .$

Et où *N* est le nombre d'échantillons prélevés,

Et où (. )* dénote l'opérateur transposé conjugué.

Si on appelle *S* le vecteur des *N* échantillons du signal d'intérêt provenant de la source pendant l'intervalle d'observation, et *Xₚ* le vecteur de *N* échantillons du signal mesuré associé au capteur *p*, et en prenant en compte le bruit thermique du capteur *p*, la transformation s'écrit : ${X}_{p} = {α}_{p} {H}_{p} S + {W}_{p}$ (1)

Où les *Wₚ* sont des échantillons indépendants d'une variable aléatoire vectorielle, gaussienne, complexe, centrée, et de covariance supposée connue et égale à 2σ²*I_{N}* (où *I_{N}* est la matrice identité de taille *N* × *N*)*.*

Puisque les paramètres *αₚ* et *S* de l'équation (1) ne sont pas observables séparément, on peut imposer la contrainte : ${\sum }_{p = 1}^{P} {\left|{α}_{p}\right|}^{2} = 1$ (2)

Les paramètres inconnus du modèle sont par conséquent les *αₚ,* la localisation (*x*₀*,y*₀) de la source, et le signal S échantillonné.

Le procédé d'analyse 100 se poursuit avec une étape 110 de localisation de la source, une étape 120 d'estimation des gains, un étape 130 d'application d'un test monosource / multisources permettant de valider la localisation de la source, et, dans la situation monosource, une étape 140 d'estimation du signal d'intérêt.

L'étape 110 consiste à estimer la position de la source, puis à mémoriser les différences de retards entre les capteurs et les décalages doppler entre les capteurs correspondant à la position estimée de la source.

Si on fait l'hypothèse que les échantillons du signal mesuré correspondent à une seule source, l'estimation de la position de cette source et du signal *S* consiste à minimiser l'écart ∥*X - HS*∥² sur les paramètres inconnus, sous la contrainte qui relie les *αₚ,* écart dans lequel X est défini par : $X = \left(\begin{matrix}{X}_{1} \\ ⋮ \\ {X}_{P}\end{matrix}\right)$, et où *H* est défini par : $H = \left(\begin{matrix}{α}_{1} {H}_{1} \\ ⋮ \\ {α}_{P} {H}_{P}\end{matrix}\right)$.

Dès lors que le support du signal d'intérêt est petit par rapport à la durée *T* de l'intervalle d'observation et que les retards sont faibles par rapport à la durée *T* de l'intervalle d'observation, alors on peut considérer que les matrices *Hₚ* sont unitaires : l'inverse ${H}_{p}^{- 1}$ de la matrice *Hₚ* est donc égale à sa transposée conjuguée : ${H}_{p}^{- 1} = {H}_{p}^{∗}$. Compte tenu des hypothèses faites, on peut montrer que le maximum de vraisemblance consiste alors à minimiser une grandeur *J* définie comme : $J = {\left‖X-HS\right‖}^{2} + μ \left({\sum }_{p = 1}^{P} {\left|{α}_{p}\right|}^{2} - 1\right) ,$ où *µ* est le paramètre de Lagrange.

L'estimée du signal au sens du maximum de vraisemblance est alors *Ŝ = Ĥ*X,* où *R* est l'estimée de *H.*

L'estimée de *H* peut être obtenue au sens du maximum de vraisemblance, en recherchant : ${max}_{{α}_{p} , x , y} A * Z \left(x, y\right) A - μ \left(A*A-1\right)$ où *A* est le vecteur de dimension *P* : *A* = (*α*₁*, α*₂*, ..., α_{P}*)*^{T}*; où *Z*(*x, y*) est la matrice d'ambiguïté d'élément (*p, q*) : ${z}_{pq} = {X}_{q}^{∗} {H}_{q} \left(x, y\right) {H}_{p}^{∗} X {\left(x, y\right)}_{p}$*.*

Cette équation montre que, à (*x*, *y)* fixé, *Â* est vecteur propre de *Z*, associé à la plus grande valeur propre *µ*(*x*, *y*) de la matrice *Z*. Incidemment, l'estimée d'une grandeur *α,* est notée *â.*

L'étape 110 consiste par exemple à estimer la position de la source, (*x̂*, *ŷ*), au sens du maximum du vraisemblance, en prenant pour (*x̂, ŷ*) la paire de coordonnées (*x, y*) qui maximise la plus grande valeur propre de *Z*(*x, y*) sur le domaine (*x*, *y*) considéré, ou à estimer la position (*x̂, ŷ*) à l'aide de toute autre méthode d'estimation par TDOA/FDOA de l'état de l'art.

L'étape 121 suivante consiste à calculer, pour ladite localisation, les retards *τₚ*(*x̂, ŷ*) et les décalages en fréquence *vₚ*(*x̂, ŷ*) et à former la matrice *Ĥ,* obtenue en concaténant les matrices *Ĥₚ = Hₚ*(*x̂, ŷ,*).

Elle consiste enfin à construire les vecteurs *Ŷₚ = Yₚ*(*x̂, ŷ*)*,* qui sont les échantillons des signaux, corrigés du retard et/ou du décalage en Doppler calculés théoriquement pour une source au point (*x̂*, *ŷ*).

Pour *p* = 1, ..., *P,* le vecteur *Ŷₚ* est de taille *N* et est obtenu par : ${\hat{Y}}_{p} = {\hat{H}}_{p} {X}_{p}$ (1)

Où *Xₚ* est le vecteur de taille *N* représentant *N* échantillons de signal démodulé reçu du capteur *p*.

Le procédé 100 passe à l'étape 122 consistant à estimer la matrice d'ambiguïté *Z*(*x̂, ŷ*)*.*

*Ẑ* est la matrice de taille *P* × *P* dont chaque élément vaut : ${z}_{pq} \left(\hat{x}, \hat{y}\right) = {Y}_{q}^{∗} \left(\hat{x}, \hat{y}\right) {Y}_{p} \left(\hat{x}, \hat{y}\right)$

Ce qui s'écrit aussi : ${z}_{pq} \left(\hat{x}, \hat{y}\right) = {X}_{q}^{∗} {H}_{q} \left(\hat{x}, \hat{y}\right) {H}_{p}^{∗} \left(\hat{x}, \hat{y}\right) {X}_{p}$

Puis, l'étape 123 consiste à diagonaliser la matrice *Z*(*x̂,ŷ*), puis à extraire la plus grande valeur propre *µ̂* de la matrice *2,* et le vecteur propre *Â = A*(*ẑ, ŷ*) *=* (*α̂*₁, ..., *α̂_{P}*) associé à cette valeur propre *µ̂*.

Le vecteur *Â* regroupe ainsi les estimés *α̂ₚ* des *αₚ.*

Le procédé 100 passe ensuite à l'étape de test 130 consistant à mettre en oeuvre un test pour s'assurer, avec une probabilité d'erreur maîtrisée, que l'on se trouve dans le cas de l'interception d'un signal provenant d'une seule source.

Il se peut en effet que deux (ou plus) sources non-colocalisées émettent des signaux complètement ou partiellement mélangés en temps et en fréquence au niveau des capteurs. Il faut donc définir un test permettant de discriminer entre une situation monosource et une situation multisources avant d'effectuer la fusion des voies de réception proprement dites.

L'étape 130 consiste ainsi à effectuer un test de décision à deux hypothèses dont le critère consiste à maximiser la probabilité de décider « multisources » en présence d'une situation multisources sous la contrainte de maîtriser la probabilité de décider « multisources » alors qu'on est dans une situation monosource.

L'hypothèse *Hyp*₀ correspond à la situation monosource. Dans cette hypothèse les échantillons de mesure sont modélisés à l'aide suivante (reprise de l'équation (1)) : ${X}_{p} = {α}_{p} {H}_{p} S + {W}_{p} , p = 1 , … , N$ (2)

L'hypothèse *Hyp*₁ correspond à la situation multisources. Dans l'hypothèse *Hyp*₁*,* toute liberté est laissée aux signaux. L'hypothèse *Hyp*₁ correspond au modèle suivant : ${X}_{p} = {S}_{p} + {W}_{p} , p = 1 , … , N$ (3)

Dans l'hypothèse *Hyp*₀*,* en l'absence de bruit, la matrice *Z* est égale à ∥*S*∥²*AA** et le vecteur propre principal de la matrice *Z* est associé à la valeur propre : *µ* = ∥*S*∥².

S'appuyant sur cette remarque, le test consiste à comparer, par rapport à un seuil *e,* la différence entre, d'une part, la somme sur l'ensemble des voies de réception, de la puissance totale des signaux , et d'autre part, la valeur propre maximale *µ̂* : ${\left‖X\right‖}^{2} - \hat{μ} < e$ (4) Où: $\left‖X\right‖ = {\sum }_{p = 1}^{P} {\left‖{X}_{p}\right‖}^{2}$

On peut montrer que l'expression ∥*X*∥² - *µ̂* à seuiller suit une loi du chi2 à 2(*P* - 1)*N* degrés de liberté. Cette densité est indépendante des gains des capteurs, du signal d'intérêt, de la localisation de la source. Le seuil e est donc déterminé hors ligne à l'aide d'une table du chi2 pour une probabilité d'erreur fixée *P_{fa},* et 2(*P* - 1)*N* degrés de liberté.

Si ∥*X*∥² - *µ̂* ≥ *e*, l'hypothèse *Hyp*₁ est retenue : il *y* a présence d'un autre signal émis par une autre source qui gêne l'analyse du signal d'intérêt sur au moins une des voies de réception.

Si ∥*X*∥² - *µ̂* < *e*, l'hypothèse *Hyp*₀ est retenue : Il *y* a absence de parasitage du signal d'intérêt et la localisation de la source obtenue à l'issue de l'étape 110 est validée.

Enfin, uniquement lorsque l'hypothèse *Hyp*₁ a été acceptée, le procédé 100 passe à l'étape 140 consistant à l'étape 142 à valider la localisation estimée de la source et à l'étape 144 à calculer une estimation *Ŝ* du signal *S*.

Pour ce faire est réalisé un filtrage des vecteurs *Ŷₚ* (correspondant aux échantillons mesurés et corrigés du retard et du décalage Doppler) par le vecteur Â : $\hat{S} = {\sum }_{p = 1}^{P} {\overline{\hat{α}}}_{p} {\hat{Y}}_{p} = {\sum }_{p = 1}^{P} {\overline{\hat{α}}}_{p} {\hat{H}}_{p} {X}_{p}$ (5) où (̅ )̅ désigne l'opérateur 'conjugué de', pour un scalaire.

Cette dernière étape permet de fusionner les *P* voies de réception en formant une seule voie bénéficiant d'un gain spatial cohérent par rapport aux voies de réception élémentaires. Si la puissance du signal reçu est équivalente sur les *P* voies de réception, le gain en puissance est de 10 · log₁₀(*P*) *dB .*

### AVANTAGES

Ainsi, à l'issue de la mise en oeuvre du procédé d'analyse présenté ci-dessus, on dispose d'une localisation fine de la source et d'une estimation du signal d'intérêt.

La mise en oeuvre du procédé facilite l'analyse aval du signal d'intérêt (extraction des paramètres tels que la fréquence, la date de début d'impulsion, la date de fin d'impulsion, la durée d'impulsion, la modulation, etc.) puisque la voie formée par fusion des voies de réception élémentaires bénéficie d'un gain spatial cohérent par rapport aux voies élémentaires.

Le procédé d'analyse ne nécessite pas de calibrer le réseau de capteurs, puisqu'il permet d'estimer les gains des différents capteurs, lesdits gains incluant l'atténuation et le déphasage induits par la propagation dans l'atmosphère.

L'homme du métier constatera que ce procédé d'analyse ne fait aucune hypothèse sur la modulation des signaux interceptés, supposée inconnue. La seule exigence sur les signaux est qu'ils soient à bande non nulle.

Ce procédé d'analyse utilise toutes les mesures disponibles, c'est-à-dire toutes les paires de voies de réception, sans privilégier un capteur particulier, ce qui pourrait être problématique si la qualité de la réception était moins bonne sur le capteur privilégié.

## Revendications

1. Procédé d'analyse (100) de signaux interceptés par un système de réception électromagnétique (15) comportant un central de calcul (20) et au moins trois capteurs (1, 2, 3) distants les uns des autres, chaque capteur comportant au moins une antenne et une voie de réception et transmettant les signaux obtenus en sortie de la voie de réception vers le central de calcul, ledit procédé d'analyse, qui est mis en œuvre par le central de calcul (20), comporte les étapes successives suivantes consistant à :
- acquérir (105), pour chaque capteur, les échantillons d'un signal de mesure sur un intervalle d'observation à partir des signaux reçus dudit capteur ;
- estimer (110) la localisation de la source d'un signal d'intérêt intercepté par les capteurs ;
- estimer (120) les gains incluant les gains propres à chaque capteur et les pertes et les déphasages dus à la propagation dans l'atmosphère,
**caractérisé en ce que** le procédé se poursuit par les étapes successives suivantes consistant à :
- appliquer un test (130) permettant de déterminer si le signal d'intérêt intercepté par les capteurs est mélangé sur au moins une voie de réception avec un autre signal, ledit test étant un test de décision à deux hypothèses dont le critère consiste à maximiser la probabilité de décider « multisources » en présence d'une situation multisources sous la contrainte de maîtriser la probabilité de décider « multisources » en présence d'une situation monosource ; et, dans le cas où le signal d'intérêt est reçu sans mélange,
- estimer (140) le signal d'intérêt en réalisant une fusion des voies de réception, en validant la localisation estimée de la source et en calculant une estimation *Ŝ* du signal d'intérêt en filtrant les vecteurs *Ŷₚ = Yₚ*(*x̂,ŷ*), correspondant aux échantillons du signal de mesure pour chaque capteur corrigés du retard et/ou du décalage en Doppler calculés théoriquement pour la localisation estimée (*x̂*, *ŷ*), par le vecteur des gains estimés pour chaque capteur noté (*α̂*₁, *α̂*₂*,* ..., *α_{P}*)*^{T},* selon l'équation $\hat{S} = {\sum }_{p = 1}^{P} {\overline{\hat{α}}}_{p} {\hat{Y}}_{p}$, où (̅ )̅ désigne l'opérateur 'conjugué de' pour un scalaire, *p* désigne l'indice d'un capteur et P est le nombre total de capteurs.

2. Procédé selon la revendication 1, selon lequel estimer (120) les gains consiste à calculer un vecteur des gains estimés pour chaque capteur (*α̂*₁, *α̂*₂*,* ..., *α_{P}*)*^{T}* en tant que vecteur propre associé à la plus grande valeur propre *µ̂* d'une matrice d'ambiguïté estimée *Ẑ*.

3. Procédé selon la revendication 2, dans lequel la matrice d'ambiguïté estimée *Ẑ* est la matrice de taille *P* × *P* dont chaque élément *z_{pq}* (*x̂, ŷ*) vaut : ${z}_{pq} = {X}_{q}^{∗} {\hat{H}}_{q} {\hat{H}}_{p}^{∗} {X}_{p}$ expression dans laquelle *p* et *q* sont deux entiers entre 1 et *P* permettant d'indicer les capteurs, le système de réception électromagnétique (15) comportant *P* capteurs, *P* étant supérieur ou égal à trois ; *Xₚ* est le vecteur des échantillons du signal de mesure associés au capteur d'indice *p* ; *X_{q}* est le vecteur des échantillons du signal de mesure associés au capteur d'indice *q* ; *Ĥₚ* est l'estimée de la matrice de transfert entre le signal émis par la source et le signal mesuré, via le capteur d'indice *p* , pour la localisation estimée (*x̂*, *ŷ*) ; et *Ĥ_{q}* est l'estimée de la matrice de transfert entre le signal émis par la source et le signal mesuré, via le capteur d'indice *q,* pour la localisation estimée (*x̂*, *ŷ*).

4. Procédé selon l'une quelconque des revendications 2 à 3, selon laquelle une localisation estimée (*x̂*, ŷ) de la source est obtenue soit en maximisant, sur les localisations (*x, y*)*,* la plus grande valeur propre *µ* de la matrice d'ambiguïté *Z*(*x, y*)*,* soit par TDOA et/ou FDOA.

5. Procédé selon l'une quelconque des revendications 2 à 4, dans lequel appliquer (130) un test consiste à comparer à un seuil la quantité : ${\sum }_{p = 1}^{P} {\left‖{X}_{p}\right‖}^{2} - \hat{μ}$
quantité dans laquelle *µ̂* est ladite plus grande valeur propre de la matrice *Ẑ* ; *p* est un entier entre 1 et *P* permettant d'indicer les capteurs, le système de réception électromagnétique (15) comportant *P* capteurs, *P* étant supérieur ou égal à trois ; et *Xₚ* est le vecteur des échantillons du signal de mesure associés au capteur d'indice *p ,*
si ladite quantité est supérieure ou égale audit seuil, le signal d'intérêt est parasité par un autre signal sur au moins une des voies de réception et l'estimation de la localisation de la source n'est pas validée ; et
si ladite quantité est inférieure audit seuil, le signal d'intérêt n'est pas parasité et l'estimation de la localisation de la source est validée.

6. Procédé selon l'une quelconque des revendications 1 à 5, dans lequel le central de calcul (20) effectue, pour chaque capteur, une démodulation desdits signaux reçus dudit capteur.

7. Procédé selon l'une quelconque des revendications 1 à 5, dans lequel les signaux reçus sont démodulés sur chaque capteur, les oscillateurs locaux embarqués sur chaque capteur étant recalés en temps et en fréquence.

8. Système de réception électromagnétique (15) comportant un central de calcul (20) et au moins trois capteurs (1, 2, 3) distants les uns des autres, chaque capteur comportant au moins une antenne et une voie de réception et transmettant des signaux obtenus en sortie de la voie de réception vers le central de calcul, **caractérisé en ce que** ledit central de calcul est programmé pour mettre en œuvre un procédé d'analyse conforme à l'une quelconque des revendications 1 à 7.

9. Produit programme d'ordinateur, comportant des instructions qui, lorsqu'elles sont exécutées par un calculateur, permettent la mise en œuvre d'un procédé d'analyse conforme à l'une quelconque des revendications 1 à 7.

## Patentansprüche

1. Analyseverfahren (100) für Signale, die von einem elektromagnetischen Empfangssystem (15) abgefangen werden, das eine Rechenzentrale (20) und mindestens drei voneinander entfernte Sensoren (1, 2, 3) umfasst, wobei jeder Sensor mindestens eine Antenne und einen Empfangskanal umfasst und die am Ausgang des Empfangskanals erhaltenen Signale an die Rechenzentrale überträgt, wobei das Analyseverfahren, das von der Rechenzentrale (20) durchgeführt wird, die folgenden aufeinanderfolgenden Schritte umfasst, die darin bestehen:
- für jeden Sensor die Abtastwerte eines Messsignals über ein Beobachtungsintervall aus den von dem betreffenden Sensor empfangenen Signalen zu erfassen (105);
- die Position der Quelle eines von den Sensoren abgefangenen interessierenden Signals zu schätzen (110);
- die Verstärkungen einschließlich der jedem Sensor eigenen Verstärkungen sowie der durch die Ausbreitung in der Atmosphäre bedingten Verluste und Phasenverschiebungen zu schätzen (120), **dadurch gekennzeichnet, dass** das Verfahren mit den folgenden aufeinanderfolgenden Schritten fortgesetzt wird, die darin bestehen:
- einen Test anzuwenden (130), der es ermöglicht, zu bestimmen, ob das von den Sensoren abgefangene interessierende Signal auf mindestens einem Empfangskanal mit einem anderen Signal gemischt ist, wobei der Test ein Entscheidungstest mit zwei Hypothesen ist, dessen Kriterium darin besteht, die Wahrscheinlichkeit einer Entscheidung für "mehrere Quellen" beim Vorliegen einer Situation mit mehreren Quellen unter der Nebenbedingung zu maximieren, die Wahrscheinlichkeit einer Entscheidung für "mehrere Quellen" beim Vorliegen einer Situation mit einer einzigen Quelle zu kontrollieren; und, falls das interessierende Signal ohne Mischung empfangen wird,
- das interessierende Signal zu schätzen (140), indem eine Fusion der Empfangskanäle durchgeführt, die geschätzte Position der Quelle validiert und eine Schätzung *Ŝ* des interessierenden Signals berechnet wird, indem die Vektoren *Ŷₚ* = *Yₚ*(*x̂,ŷ*)*,* die den um die theoretisch für die geschätzte Position (*x̂*, ŷ) berechnete Verzögerung und/oder Doppler-Verschiebung korrigierten Abtastwerten des Messsignals für jeden Sensor entsprechen, mit dem als (*α̂*₁, *α̂*₂*, ..., α̂_{P}*)*^{T}* bezeichneten Vektor der geschätzten Verstärkungen für jeden Sensor gemäß der Gleichung $\hat{S} = {\sum }_{p = 1}^{P} {\overline{\hat{α}}}_{p} {\hat{Y}}_{p}$ gefiltert werden, wobei 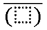 den Operator ,konjugiert von' für einen Skalar bezeichnet, *p* den Index eines Sensors bezeichnet und *P* die Gesamtzahl der Sensoren ist.

2. Verfahren nach Anspruch 1, bei dem das Schätzen (120) der Verstärkungen darin besteht, einen Vektor der geschätzten Verstärkungen für jeden Sensor (*α̂*₁, *α̂*₂*, ..., α̂_{P}*)*^{T}* als Eigenvektor zu berechnen, der dem größten Eigenwert *µ̂* einer geschätzten Ambiguitätsmatrix *Ẑ* zugeordnet ist.

3. Verfahren nach Anspruch 2, bei dem die geschätzte Ambiguitätsmatrix *Ẑ* die Matrix der Größe *P* × *P* ist, deren jedes Element *z_{pq}* (*x̂, ŷ*) gleich: ${z}_{pq} = {X}_{q}^{∗} {\hat{H}}_{q} {\hat{H}}_{p}^{∗} {X}_{p}$ Ausdruck, in dem *p* und *q* zwei ganze Zahlen zwischen 1 und *P* sind, die eine Indizierung der Sensoren ermöglichen, wobei das elektromagnetische Empfangssystem (15) *P* Sensoren umfasst und *P* größer als oder gleich drei ist; *Xₚ* der Vektor der dem Sensor mit Index *p* zugeordneten Abtastwerte des Messsignals ist; *X_{q}* der Vektor der dem Sensor mit Index *q* zugeordneten Abtastwerte des Messsignals ist; *Ĥₚ* die Schätzung der Übertragungsmatrix zwischen dem von der Quelle ausgesendeten Signal und dem über den Sensor mit Index *p* gemessenen Signal für die geschätzte Position (*x̂*, *ŷ*) ist; und *Ĥ_{q}* die Schätzung der Übertragungsmatrix zwischen dem von der Quelle ausgesendeten Signal und dem über den Sensor mit Index *q* gemessenen Signal für die geschätzte Position (*x̂*, *ŷ*) ist.

4. Verfahren nach einem der Ansprüche 2 bis 3, bei dem eine geschätzte Position (*x̂*, ŷ) der Quelle entweder durch Maximieren des größten Eigenwerts der Ambiguitätsmatrix über die Positionen (*x*, *y*) oder durch TDOA (Ankunftszeitdifferenz) und/oder FDOA (Ankunftsfrequenzdifferenz) erhalten wird.*µZ*(*x*, *y*)

5. Verfahren nach einem der Ansprüche 2 bis 4, bei dem das Anwenden (130) eines Tests darin besteht, die Größe mit einem Schwellenwert zu vergleichen: ${\sum }_{p = 1}^{P} {\left‖{X}_{p}\right‖}^{2} - \hat{μ}$
Größe, bei der *µ̂* der genannte größte Eigenwert der Matrix *Ẑ* ist; *p* eine ganze Zahl zwischen 1 und *P* ist, die eine Indizierung der Sensoren ermöglicht, wobei das elektromagnetische Empfangssystem (15) *P* Sensoren umfasst und *P* größer als oder gleich drei ist; und *Xₚ* der Vektor der dem Sensor mit Index *p* zugeordneten Abtastwerte des Messsignals ist,
wenn die genannte Größe größer als oder gleich dem genannten Schwellenwert ist, wird das interessierende Signal auf mindestens einem der Empfangskanäle durch ein anderes Signal gestört und die Schätzung der Position der Quelle wird nicht validiert; und
wenn die genannte Größe kleiner als der genannte Schwellenwert ist, wird das interessierende Signal nicht gestört und die Schätzung der Position der Quelle wird validiert.

6. Verfahren nach einem der Ansprüche 1 bis 5, bei dem die Rechenzentrale (20) für jeden Sensor eine Demodulation der von dem betreffenden Sensor empfangenen Signale durchführt.

7. Verfahren nach einem der Ansprüche 1 bis 5, bei dem die empfangenen Signale an jedem Sensor demoduliert werden, wobei die auf jedem Sensor befindlichen lokalen Oszillatoren zeitlich und frequenzmäßig abgeglichen sind.

8. Elektromagnetisches Empfangssystem (15), das eine Rechenzentrale (20) und mindestens drei voneinander entfernte Sensoren (1, 2, 3) umfasst, wobei jeder Sensor mindestens eine Antenne und einen Empfangskanal umfasst und am Ausgang des Empfangskanals erhaltene Signale an die Rechenzentrale überträgt, **dadurch gekennzeichnet, dass** die genannte Rechenzentrale programmiert ist, ein Analyseverfahren nach einem der Ansprüche 1 bis 7 durchzuführen.

9. Computerprogrammprodukt, das Anweisungen umfasst, die, wenn sie von einem Rechner ausgeführt werden, die Durchführung eines Analyseverfahrens nach einem der Ansprüche 1 bis 7 ermöglichen.

## Claims

1. Analysis method (100) for signals intercepted by an electromagnetic reception system (15) comprising a computing center (20) and at least three sensors (1, 2, 3) distant from one another, each sensor comprising at least one antenna and a receive channel and transmitting the signals obtained at the output of the receive channel to the computing center, said analysis method, which is implemented by the computing center (20), comprises the following successive steps consisting in:
- acquiring (105), for each sensor, the samples of a measurement signal over an observation interval from the signals received from said sensor;
- estimating (110) the location of the source of a signal of interest intercepted by the sensors;
- estimating (120) the gains including the gains specific to each sensor and the losses and the phase shifts due to propagation in the atmosphere, **characterized in that** the method continues with the following successive steps consisting in:
- applying a test (130) making it possible to determine whether the signal of interest intercepted by the sensors is mixed on at least one receive channel with another signal, said test being a two-hypothesis decision test whose criterion consists in maximizing the probability of deciding "multiple sources" in the presence of a multiple-source situation under the constraint of controlling the probability of deciding "multiple sources" in the presence of a single-source situation; and, in the case where the signal of interest is received without mixing,
- estimating (140) the signal of interest by performing a fusion of the receive channels, by validating the estimated location of the source and by calculating an estimate *Ŝ* of the signal of interest by filtering the vectors *Ŷₚ = Yₚ*(ŷ)*,* corresponding to the samples of the measurement signal for each sensor corrected for the delay and/or the Doppler shift theoretically calculated for the estimated location (*x*, *ŷ*), by the vector of the estimated gains for each sensor denoted (*α̂*₁, *α̂*₂*, ..., α̂_{P}*)*^{T},* according to the equation $\hat{S} = {\sum }_{p = 1}^{P} {\overline{\hat{α}}}_{p} {\hat{Y}}_{p}$*,* where 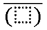 denotes the 'conjugate of operator for a scalar, *p* denotes the index of a sensor *and P* is the total number of sensors.

2. Method according to claim 1, wherein estimating (120) the gains consists in calculating a vector of the estimated gains for each sensor (*α̂*₁, *α̂*₂*, ..., α̂_{P}*)*^{T}* as an eigenvector associated with the largest eigenvalue *µ̂* of an estimated ambiguity matrix 2.

3. Method according to claim 2, wherein the estimated ambiguity matrix *Ẑ* is the matrix of size *P* × *P* of which each element *z_{pq}*(*x̂, ŷ*) is equal to: ${z}_{pq} = {X}_{q}^{∗} {\hat{H}}_{q} {\hat{H}}_{p}^{∗} {X}_{p}$ expression in which *p* and *q* are two integers between 1 and *P* making it possible to index the sensors, the electromagnetic reception system (15) comprising *P* sensors, *P* being greater than or equal to three; *Xₚ* is the vector of the samples of the measurement signal associated with the sensor having index *p*; *X_{q}* is the vector of the samples of the measurement signal associated with the sensor having index *q*; *Ĥₚ* is the estimate of the transfer matrix between the signal emitted by the source and the measured signal, via the sensor having index *p,* for the estimated location (*x̂, ŷ*); and *Ĥ_{q}* is the estimate of the transfer matrix between the signal emitted by the source and the measured signal, via the sensor having index *q*, for the estimated location (*x̂*, *ŷ*).

4. Method according to any one of claims 2 to 3, according to which an estimated location (*x̂*, *ŷ*) of the source is obtained either by maximizing, over the locations (*x, y*), the largest eigenvalue *µ* of the ambiguity matrix *Z*(*x, y*), or by time difference of arrival (TDOA) and/or frequency difference of arrival (FDOA).

5. Method according to any one of claims 2 to 4, wherein applying (130) a test consists in comparing the quantity to a threshold: ${\sum }_{p = 1}^{P} {\left‖{X}_{p}\right‖}^{2} - \hat{μ}$
quantity in which *µ̂* is said to be the largest eigenvalue of the matrix *Ẑ*; *p* is an integer between 1 and *P* making it possible to index the sensors, the electromagnetic reception system (15) comprising *P* sensors, *P* being greater than or equal to three; and *Xₚ* is the vector of the samples of the measurement signal associated with the sensor having index *p,*
if said quantity is greater than or equal to said threshold, the signal of interest is interfered with by another signal on at least one of the receive channels and the estimation of the location of the source is not validated; and
if said quantity is less than said threshold, the signal of interest is not interfered with and the estimation of the location of the source is validated.

6. Method according to any one of claims 1 to 5, wherein the computing center (20) performs, for each sensor, a demodulation of said signals received from said sensor.

7. Method according to any one of claims 1 to 5, wherein the received signals are demodulated on each sensor, the local oscillators carried on each sensor being realigned in time and frequency.

8. Electromagnetic reception system (15) comprising a computing center (20) and at least three sensors (1, 2, 3) distant from one another, each sensor comprising at least one antenna and a receive channel and transmitting signals obtained at the output of the receive channel to the computing center, **characterized in that** said computing center is programmed to implement an analysis method according to any one of claims 1 to 7.

9. Computer program product, comprising instructions which, when executed by a computer, enable the implementation of an analysis method according to any one of claims 1 to 7.
